# EUROPÄISCHE PATENTSCHRIFT

(11) **EP 0 794 977 B1**
(45) Veröffentlichungstag und Bekanntmachung des Hinweises auf die Patenterteilung: **24.03.1999**
(21) Anmeldenummer: 95941617.3
(22) Anmeldetag: 20.11.1995
(51) Int. Cl.: C08K 9/04, C08K 3/36, C09J 175/04, C09K 3/10

(54) **POLYURETHAN-ZUSAMMENSETZUNGEN MIT STABILER REAKTIVITÄT**
POLYURETHANE COMPOSITIONS WITH STABLE REACTIVITY
COMPOSITIONS DU TYPE POLYURETHANE A REACTIVITE STABLE

(30) Priorität: 29.11.1994 DE 4442353
(43) Veröffentlichungstag der Anmeldung: 17.09.1997
(73) Patentinhaber: Henkel Kommanditgesellschaft auf Aktien, 40191 Düsseldorf (DE)
(72) Erfinder: THIELE, Lothar, D-42799 Leichlingen (DE); SCHLINGLOFF, Nicole, D-40724 Hilden (DE); PLUTNIOK, Claudia, D-40239 Düsseldorf (DE)
(86) Internationale Anmeldenummer: EP9504559
(87) Internationale Veröffentlichungsnummer: WO9617014

(56) Entgegenhaltungen:
- EP-A- 0 556 451
- US-A- 4 142 030
- US-A- 4 474 900
- DATABASE WPI Week 9305 Derwent Publications Ltd., London, GB; AN 93-042624 & JP,A,04 370 146 (YOKOHAMA RUBBER CO.) , 22.Dezember 1992
- DATABASE WPI Week 8404 Derwent Publications Ltd., London, GB; AN 84-021165 & JP,A,58 213 015 (NICHIAS CORP.) , 10.Dezember 1983

## Beschreibung

Die vorliegende Erfindung betrifft verzögerte unkatalysierte und katalysierte Polyurethanzusammensetzungen mit stabiler Reaktivität sowie deren Verwendung für Klebstoffe, Dichtungsmassen und Gießmassen.

Ein -bzw. mehrkomponentige Polyurethanzusammensetzungen werden schon seit langer Zeit als Klebstoffe, Dichtungsmassen oder Gießmassen eingesetzt. Zusammenfassend sind diese Einsatzgebiete für Polyurethanzusammensetzungen z.B. in den Kapiteln 8 bzw. 11 des Kunststoff-Handbuchs, 3. Auflage, Bd. 7, Hanser-Verlag, 1993, beschrieben. Bei zweikomponentigen Systemen besteht die eine Komponente in der Regel aus flüssigen Polyhydroxyverbindungen, die ggf. Füllstoffe, Katalysatoren und weitere Hilfsstoffe enthält, die zweite Komponente enthält dabei im wesentlichen ein flüssiges Di- oder Polyisocyanat entweder in reiner Form oder als sogenanntes Quasi-Prepolymer oder in Form von Isomerenmischungen. Wegen ihrer guten Haftungseigenschaften auf den unterschiedlichsten Materialien sowie hohen Zug-, Zugscher- sowie Schälfestigkeiten bei sehr hoher Bruchdehnung finden diese Klebstoffe, Dichtstoffe und Gießmassen in einer Vielzahl von industriellen und handwerklichen Applikationen Anwendung. Beispielhaft erwähnt seien hier nur der Automobilbau, der allgemeine Nutzfahrzeugbau, der Schiff- bzw. Bootsbau, der allgemeine Maschinenbau, die Elektroindustrie sowie der Hochbau.

Bei vielen Applikationen verlangen die Arbeitsabläufe sehr lange Topfzeiten, gleichzeitig müssen diese Topfzeiten über den Lagerungszeitraum der Polyurethanzusammensetzungen vor der Applikation konstant bleiben.

Unter Topfzeit wird der Zeitraum verstanden, der nach der vollständigen Vermischung eines Zwei- oder Mehrkomponentensystems zur sachgerechten Verarbeitung verbleibt, bevor die Viskosität der Mischung durch einsetzende Reaktion so hoch geworden ist, daß die Mischung nicht mehr sachgerecht verarbeitet werden kann.

Innerhalb gewisser Grenzen läßt sich die Topfzeit durch die Art und Menge des eingesetzten Katalysators steuern, bei einer gegebenen Formulierung ohne Katalysator ist es jedoch bisher nicht möglich gewesen, die Reaktion und damit die Topfzeit noch weiter zu verlängern. In diesen Fällen mußte dann auf reaktionsträgere Isocyanate ausgewichen werden. In der allgemeinen Literatur bzw. in der Patentliteratur wird vielfach vorgeschlagen, die unkatalysierte Reaktion durch Säurezugabe zu verzögern, siehe z.B. J.H. Saunders, K.C. Frisch, Polyurethanes Chemistry and Technology, Bd. 1, Chemistry, S. 213, Interscience Publ., 1962. Es wird z.B. die Zugabe von Salzsäure oder von Säurechloriden vorgeschlagen, bei dieser Vorgehensweise handelt es sich jedoch nicht um eine echte Verzögerung der Reaktion, sondern um eine Neutralisation aller katalytisch wirkenden alkalischen Verunreinigungen in der Zusammensetzung. Die Zugabe von Säuren zu Klebstoffen, Dichtmassen oder Gießharzen kann jedoch zu Korrosionseffekten an den Oberflächen der zu verklebenden bzw. zu vergießenden Substrate führen, so daß diese Methode in vielen Fällen nicht anwendbar ist.

Es bestand daher die Aufgabe, die Reaktivität von zwei- oder mehrkomponentigen Polyurethanzusammensetzungen unter die sogenannte "Grund-Reaktivität" der Zusammensetzung abzusenken, d.h., unter die Reaktivität, die die Zusammensetzung ohne Katalysatorgehalt hat, zusätzlich sollte die mit dieser Reaktivität direkt zusammenhängende Topfzeit über die Lagerzeit der nicht vermischten Komponenten möglichst konstant bleiben.

Erfindungsgemäß wird diese Aufgabe dadurch gelöst. daß die zwei- oder mehrkomponentigen Polyurethan-Zusammensetzungen eine Harzkomponente enthalten. die
- ein oder mehrere Di- und/oder Polyole
- hydrophile hochdisperse Kieselsäure
- Füllstoffe ausgewählt aus der Gruppe gebildet aus Kalksteinmehl, natürliche, gemahlene Kreiden (Calciumcarbonate oder Calcium-Magnesiumcarbonate). Schwerspat, Kalk, Glimmer, Tone oder Ruß gebildet sind
- Molekularsieb in Form eines Na-Al-Silikates
enthält, wobei zumindest ein Teil der Füllstoffe oberflächenbehandelt ist.

Die Härterkomponente enthält dabei ein oder mehrere Di- und/oder Polyisocyanate.

Unter "hochdisperser Kieselsäure" wird eine feinteilige im wesentlichen amorphe pyrogene Kieselsäure mit über 99,8 Gew.% SiO₂-Gehalt verstanden, wie sie z.B. durch Hydrolyse von Siliciumtetrachlorid in einer Knallgasflamme hergestellt wird. Diese Kieselsäuren sind z.B. unter dem Warenzeichen "Aerosil" im Handel erhältlich.

Die Zugabe von hochdispersen Kieselsäuren zu Klebstoffen, Dichtstoffen oder Gießharzen ist in der Praxis seit langem bekannt und üblich. Nach bisherigem Stand der Technik erfolgt die Zugabe von Kieselsäuren mit dem Ziel, das Absetzverhalten der Füllstoffe in den Zusammensetzungen zu reduzieren oder den Zusammensetzungen ein thixotropes Rheologie-Verhalten zu verleihen. Bei pastösen Produkten ist jedoch die Aerosilzugabe gemäß Stand der Technik häufig nicht nötig, da die rheologischen Eigenschaften bei diesen Produkten durch die feinteiligen Füllstoffe erzielt werden.

Die Verwendung von hochdispersen Kieselsäuren zur Absenkung der Reaktivität von Polyurethansystemen unter die Grundreaktivität ist neu und wurde bisher nicht beschrieben. Diese Wirkung der Kieselsäuren als Reaktionsverzögerer und -stabilisator ist jedoch bei Füllstoffhaltigen Polyurethansystemen nur nutzbar, wenn zumindestens ein Teil der Füllstoffe oberflächenvorbehandelt ("gecoatet") ist.

Als hochdisperse Kieselsäuren werden dabei die nicht nachbehandelten, sogenannten "hydrophilen" Kieselsäuren verwendet, die im Handel mit verschiedenen spezifischen Oberflächen (BET-Oberflächen) erhältlich sind. Beispielhaft erwähnt seien die folgenden Handelsprodukte: Aerosil 380, Aerosil 300, Aerosil 200, Aerosil 150, Aerosil 130.

Als Füllstoffe können alle in der Polyurethanchemie gängigen und an sich bekannten Füllstoffe verwendet werden, sofern zumindest ein Teil der Füllstoffe gecoatet ist. Geeingnete Füllstoffe sind Kalksteinmehl, natürliche, gemahlene Kreiden (Calciumcarbonate oder Calcium-Magnesiumcarbonate), Schwerspat, Talk, Glimmer, Tone oder ggf. auch Ruß. Ein Teil der Füllstoffe, in der Regel mindestens 20 Gew.%, vorzugsweise mindestens 30 Gew.% des Füllstoffs müssen dabei gecoatet sein. Die Oberflächenvorbehandlung von Füllstoffen ist an sich bekannt, in der Literatur empfohlen wird die Verwendung von gecoateten Füllstoffen, um deren Dispergierung in der Polymermatrix zu erleichtern. Ein Hinweis auf den Einfluß der Oberflächen-Vorbehandlung auf die Topfzeit von Polyurethansystemen ist nicht bekannt.

Als Coatungsmaterial (Oberflächenvorbehandlungsmaterial) eignen sich dabei eine Vielzahl von Verbindungen, beispielhaft erwähnt sei die Oberflächenvorbehandlung mit langkettigen gesättigten oder ungesättigten Fettsäuren, insbesondere der Stearinsäure bzw. deren Alkali- bzw. Erdalkalisalzen, carboxylierten Polybutadienen, carboxylierten Polyalphaolefinen, Harzsäuren (Abietinsäure bzw. deren Derivate) und/oder deren Metallsalze und/oder deren Ester.

Als Di- und/oder Polyole für das Bindemittel eignen sich vorzugsweise die flüssigen Polyhydroxyverbindungen mit zwei bzw. drei Hydroxylgruppen pro Molekül, wie z.B. di-und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole, die z.B. durch die saure Polymerisation von Tetrahydrofuran hergestellt werden, dabei liegt der Molekulargewichtsbereich der Polytetramethylenglykole zwischen 200 und 6000, vorzugsweise im Bereich von 400 bis 4000.

Weiterhin sind als Polyole die flüssigen Polyester geeignet, die durch Kondensation von Di- bzw. Tricarbonsäuren, wie z.B. Adipinsäure, Sebazinsäure, Glutarsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, Glyzerin oder Trimethylolpropan hergestellt werden können.

Eine weitere Gruppe der erfindungsgemäße einzusetzenden Polyole sind die Polyester auf der Basis von -Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden (siehe z.B. DE-A-3626223). Weitere geeignete Polyole sind Polycarbonatpolyole und Dimerdiole (Fa. Henkel) sowie insbesondere Rizinusöl und dessen Derivate. Auch die Hydroxy-funktionellen Polybutadiene, wie sie z.B. unter dem Handelsnamen "Poly-bd" erhältlich sind, können für die erfindungsgemässen Zusammensetzungen als Polyole eingesetzt werden.

Als Di- oder Polyisocyanate werden vorzugsweise die aromatischen Isocyanate verwendet, z.B. Diphenylmethandiisocyanat, entweder in Form der reinen Isomeren, als Isomerengemisch der 2,4'-/4,4'-Isomeren oder auch das mit Carbodiimid verflüssigte Diphenylmethandiisocyanat (MDI), das z.B. unter dem Handelsnamen Isonate 143 L bekannt ist. Außerdem kann das sogenannte "Roh-MDI", d.h., die Isomeren/Oligomerenmischung des MDI eingesetzt werden, wie sie z.B. unter dem Handelsnamen PAPI bzw. Desmodur VK im Handel erhältlich sind. Weiterhin können sogenannte "Quasi-Prepolymere", d.h. Umsetzungsprodukte des MDI bzw. des Toluylendiisocyanats (TDI) mit niedermolekularen Diolen wie z.B. Ethylenglykol, Diethylenglykol, Propylenglykol, Dipropylenglykol oder Triethylenglykol verwendet werden. Obwohl die vorgenannten Isocyanate die besonders bevorzugten Isocyanate sind, können auch in Sonderfällen aliphatische bzw. cycloaliphatische Di- oder Polyisocyanate eingesetzt werden wie z.B. das hydrierte MDI (H₁₂MDI) , Tetramethylxylylendiisocyanat (TMXDI), 1-Isocyanatomethyl-3-isocyanato-1,5,5-trimethyl-cyclohexan (IPDI), Hexan-1,6-diisocyanat (HDI), Biuretisierungsprodukt des HDI, Isocyanuratisierungsprodukt des HDI oder Dimerfettsäure-diisocyanat.

Obwohl eine bevorzugte Ausführungsform der erfindungsgemäßen Zusammensetzungen katalysatorfrei ist, können auch Katalysatoren verwendet werden. Als Katalysatoren werden dann die üblichen, in der Polyurethan-Chemie bekannten metallorganischen Verbindungen eingesetzt, wie z.B. Eisen-oder auch insbesondere Zinn-Verbindungen. Beispiele hierfür sind 1,3-Dicarbonyl-Verbindungen des Eisens wie Eisen (III)acetylacetonat sowie insbesondere die zinnorganischen Verbindungen des 2- bzw. 4-wertigen Zinns, hier insbesondere die Sn(II)-Carboxylate bzw. die Dialkyl-Sn(IV) -Dicarboxylate oder die entsprechenden Dialkoxylate wie z.B. Dibutylzinndilaurat, Dibutylzinndiacetat, Dioctylzinndiacetat, Dibutylzinnmaleat, Zinn(II)-Octoat, Zinn(II)-Phenolat oder auch die Acetylacetonate des 2-bzw. 4-wertigen Zinns. Weiterhin können die hochwirksamen tertiären Amine oder Amidine als Katalysatoren verwendet werden, ggf. in Kombination mit den oben genannten Zinnverbindungen. Als Amine kommen dabei sowohl acyclische als auch insbesondere cyclische Verbindungen in Frage. Beispiele sind das Tetramethylbutandiamin, Bis(dimethylaminoethyl)ether, 1,4-Diazabicyclooctan (DABCO), 1,8-Diaza-bicyclo-(5.4.0)-Undecen, 2,2'-Dimorpholinodiethylether oder Dimethylpiperazin oder auch Mischungen der vorgenannten Amine.

Weiterhin kann der erfindungsgemäße Klebstoff ggf. zusätzlich Stabilisatoren enthalten. Als "Stabilisatoren" im Sinne dieser Erfindung sind Antioxidantien, UV-Stabilisatoren oder Hydrolyse-Stabilisatoren zu verstehen. Die Auswahl dieser Stabilisatoren richtet sich zum einen nach den Hautpkomponenten der Zusammensetzung und zum anderen nach den Applikationsbedingungen sowie den zu erwartenden Belastungen der Verklebung, Dichtungsfuge oder Einkapselung. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Bestehen wesentliche Bestandteile des Polyurethanprepolymers aus Polyesterbausteinen, werden vorzugsweise Hydrolyse-Stabilisatoren, z.B. vom Carbodiimid-Typ, eingesetzt.

Die erfindungsgemäßen Zusammensetzungen können außerdem noch weitere an sich bekannte Hilfs- und Zusatzmittel enthalten, wie z.B. Weichmacher (beispielsweise Phthalsäureester) oder zusätzliche Thixotropiermittel (z.B. Bentone, Harnstoffderivate, fibrilierte oder Pulp-Kurzfasern) oder Farbpasten bzw. Pigmente.

Bevorzugt werden die Polyole und die Polyisocyanate als Zweikomponentensystem eingesetzt, wobei die sog. Harzkomponente die Polyole sowie die Füllstoffe, die hochdisperse Kieselsäure sowie ggf. Trocknungsmittel enthält. Als Trocknungsmittel können hierbei alle gängigen Wasserfänger eingesetzt werden wie z.B. monofunktionelle Isocyanate, Orthoameisensäureester, ganz besonders bevorzugt sind die Natrium-Aluminiumsilikate in Form der Molekularsiebe.

Die sog. Härterkomponente enthält in der Regel nur das Di-bzw. Polyisocyanat bzw. das "Quasiprepolymer", jedoch kann auch diese Komponente gegebenenfalls geringe Mengen an Füllstoffen, Thixotropiermitteln oder Pigmenten enthalten.

Wie bereits eingangs erwähnt, können die erfindungsgemässen Polyurethan-Zusammensetzungen als Klebstoffe, Dichtstoffe und/oder Gießmassen in einer Vielzahl von Applikationen Anwendung finden, insbesondere eignen sie sich für die Montage-Verklebung und strukturelle Verklebung, z.B. bei der Herstellung von Sandwich-Bauteilen.

Nachfolgend wird die Erfindung anhand einiger besonders bevorzugter Ausführungsbeispiele näher erläutert. Die Mengenangaben in den Beispielen sind Gewichtsteile, wenn nicht anders angegeben.

### Beispiel 1: (Vergleichsbeispiel gemäß Stand der Technik) Unverzögertes katalysatorfreies Polyurethansystem.

| Harzkomponente | Massenanteile in % |
|---|---|
| Rizinusöl OH-Zahl ca. 160 Polypropylenglykol, OH-Zahl ca. 240, | 29,0 |
| trifunktionell | 5,0 |
| Na-Al-Silikat in Rizinusöl (1:1-Mischung) | 6,0 |
| Kalksteinmehl ungecoatet | 20,5 |
| Kalksteinmehl gecoatet | 39,5 |
| | |

| Härterkomponente | |
|---|---|
| Diphenylmethan-4,4'diisocyanat (Roh-MDI) | 100 |
| Mischungsverhältnis Harz:Härter | 6:1 |
| Topfzeit | 45 min |
| Topfzeit nach 8 Wochen getrennter Lagerung | 37,5 min |
| der Harz- und Härterkomponente | |

### Beispiel 2: (Erfindungsgemäß)

### Verzögertes katalysatorfreies Polyurethansystem

| Harzkomponente | |
|---|---|
| Rizinusöl OH-Zahl ca. 160 | 29,0 |
| Polypropylenglykol, OH-Zahl ca. 240, trifunktionell | 5,0 |
| Na-Al-Silikat in Rizinusöl (1:1-Mischung) | 6,0 |
| Kalksteinmehl ungecoatet | 20,5 |
| Kalksteinmehl gecoatet | 39,0 |
| Aerosil 150 | 0,5 |
| | |

| Härterkomponente und Mischungsverhältnis entsprechen Beispiel 1 | |
|---|---|
| Topfzeit | 60 min |
| Topfzeit nach 8 Wochen Lagerung | 60 min |

Ein Vergleich der Beispiele 1 (Vergleichsbeispiel) und 2 zeigt, daß der erfindungsgemäße Zusatz von Aerosil im Beispiel 2 auch nach 8-wöchiger Lagerung der Harz- und Härterkomponente keine Veränderung der Topfzeit beobachtet wird. Außerdem wird wie gewünscht die Topfzeit insgesamt verlängert.

Wird als Füllstoff jedoch nur nicht-gecoatetes Kalksteinmehl verwendet, so läßt sich durch die Aerosilzugabe keine Beeinflussung der Topfzeit erzielen.

### Beispiel 3: (Erfindungsgemäß)

### Beschleunigtes katalysatorhaltiges Polyurethansystem.

| Harzkomponente | |
|---|---|
| Rizinusöl | 27,0 |
| Polypropylenglykol, OH-Zahl ca, 240, trifunktionell | 3,0 |
| Na-Al-Silikat in Rizinusöl (1:1-Mischung) | 6,2 |
| Kalksteinmehl ungecoatet | 49,475 |
| Kalksteinmehl gecoatet | 13,5 |
| Aerosil 200 | 0,8 |
| 1,4 -Diazabicyclo[2.2.2]octan (33,3%ige Lösung in Dipropylenglykol) | 0,025 |
| | |

| Härterkomponente und Mischungsverhältnis entsprechen Beispiel 1 | |
|---|---|
| | |
| Topfzeit | 35 min |
| Topfzeit nach 12 Wochen Lagerung | 35 min |

Dieses Beispiel zeigt, daß auch bei katalysatorhaltigen Formulierungen bei erfindungsgemäßer Verwendung von Aerosil und zumindest teilweise gecoatetem Füllstoff die Topfzeit nach langer Lagerzeit konstant bleibt.

## Patentansprüche

1. Zwei- oder mehrkomponentige Polyurethanzusammensetzung, **dadurch gekennzeichnet**, dass die Harzkomponente
a) ein- oder mehrere Di- und/oder Polyole
b) hydrophile, hochdisperse Kieselsäure
c) Füllstoffe ausgewählt aus der Gruppe gebildet aus Kalksteinmehl, natürliche, gemahlene Kreiden (Calciumcarbonate oder Calcium-Magnesiumcarbonate), Schwerspat, Talk, Glimmer, Tone oder Ruß
d) Molekularsieb in Form eines Na-Al-Silikates enthält und
die Härterkomponente ein oder mehrere Di- und/oder Polyisocyanate enthält, wobei zumindest ein Teil der Füllstoffe oberflächenbehandelt ist.

2. Polyurethanzusammensetzung gemäß Anspruch 1, **dadurch gekennzeichnet,** dass mindestens 20% der gesamten Füllstoffmenge oberflächenbehandelt ist.

3. Polyurethanzusammensetzung gemäß mindestens einem der vorhergehenden Ansprüche, **dadurch gekennzeichnet**, dass als Polyol eine Mischung aus hydroxyfunktionellen Ölen mit einer OH-Funktionalität von mindestens 2 und di- und/oder trifunktionellen Polypropylenoxiden, Polyethylenoxiden oder deren Copolymeren verwendet wird.

4. Polyurethansuzammensetzung gemäß mindestens einem der vorhergehenden Ansprüche, **dadurch gekennzeichnet,** dass die hochdisperse Kieselsäure in einer Menge von 0.1 bis 5 Gew.% bezogen auf die Gesamtzusammensetzung, vorzugsweise in einer Menge von 0.3 bis 3 Gew.% verwendet wird.

5. Polyurethanzusammensetzung gemäß mindestens einem der vorhergehenden Ansprüche, **dadurch gekennzeichnet**, dass mindestens ein Teil der Füllstoffe mit Stearinsäure und/oder anderen Fettsäuren und/oder deren Alkalisalzen, carboxyliertem Polydien, carboxylierten Polyalphaolefinen, Harzsäuren und/oder deren Metallsalzen oberflächenbehandelt ist.

6. Polyurethanzusammensetzung gemäß mindestens einem der vorhergehenden Ansprüche, **dadurch gekennzeichnet**, dass die frei von Katalysatoren ist.

7. Polyurethanzusammensetzung gemäß mindestens einem der Ansprüche 1 bis 5, **dadurch gekennzeichnet,** dass sie als Katalysatoren zinnorganische Verbindungen und/oder tertiäre Amine und/oder Amidine enthält.

8. Polyurethanzusammensetzung gemäß mindestens einem der vorhergehenden Ansprüche, **dadurch gekennzeichnet**, dass als Di- oder Polyisocyanat das Diphenylmethandiisocyanat (MDI) entweder rein oder als Oligomeren-/Isomerenmischung (Roh-MDI), Toluylendiisocyanat und/oder deren Umsetzungsprodukte mit niedermolekularen Diolen verwendet wird.

9. Verwendung der Polyurethanzusammensetzung gemäß mindestens einem der vorhergehenden Ansprüche als Klebstoff, Dichtungsmasse oder Gießmasse.

## Claims

1. A polyurethane composition of two or more components, characterized in that the resin component contains
a) one or more diols and/or polyols,
b) hydrophilic highly disperse silica,
c) fillers selected from the group consisting of limestone flour, natural ground chalks (calcium carbonates or calcium-magnesium carbonates), heavy spar, talcum, mica, clays or carbon black,
d) molecular sieve in the form of an Na-Al silicate
while the hardener component contains one or more diisocyanates and/or polyisocyanates, the fillers being at least partly coated.

2. A polyurethane composition as claimed in claim 1, characterized in that at least 20% of the total filler content is coated.

3. A polyurethane composition as claimed in at least one of the preceding claims, characterized in that the polyol is a mixture of hydroxyfunctional oils with an OH functionality of at least 2 and difunctional and/or trifunctional polypropylene oxides, polyethylene oxides or copolymers thereof.

4. A polyurethane composition as claimed in at least one of the preceding claims, characterized in that the highly disperse silica is used in a quantity of 0.1 to 5% by weight, based on the composition as a whole, and preferably in a quantity of 0.3 to 3% by weight.

5. A polyurethane composition as claimed in at least one of the preceding claims, characterized in that the fillers are at least partly coated with stearic acid and/or other fatty acids and/or alkali metal salts thereof, carboxylated polydiene, carboxylated poly-α-olefins, resin acids andlor metal salts thereof.

6. A polyurethane composition as claimed in at least one of the preceding claims, characterized in that it is catalyst-free.

7. A polyurethane composition as claimed in at least one claims 1 to 5, characterized in that it contains organotin compounds and/or tertiary amines and/or amidines as catalysts.

8. A polyurethane composition as claimed in at least one of the preceding claims, characterized in that diphenyl methane diisocyanate (MDI) either in pure form or as an oligomer/isomer mixture (crude MDI), toluene diisocyanate and/or reaction products thereof with low molecular weight diols is/are used as the diisocyanate or polyisocyanate.

9. The use of the polyurethane composition claimed in at least one of the preceding claims as an adhesive, sealant or casting compound.

## Revendications

1. Composition de polyuréthane à deux ou plusieurs composants,
caractérisée en ce que
le composant de résine renferme :
a) un ou plusieurs di et/ou polyols
b) de l'acide silicique hydrophile hautement dispersé,
c) des substances de remplissage choisies dans le groupe formé du calcaire broyé, de craies naturelles broyées (carbonates de calcium ou carbonates de calcium/magnésium), de la barytine, du talc, du mica, des argiles ou du noir de fumée,
d) un tamis moléculaire sous forme d'un aluminosilicate de sodium et
le composant de durcisseur renferme un ou plusieurs di et/ou polyisocyanates
dans laquelle une partie au moins des substances de remplissage est traitée en surface.

2. Composition de polyuréthane selon la revendication 1,
caractérisée en ce qu'
au moins 20 % de la quantité totale de substance de remplissage est traitée en surface.

3. Composition de polyuréthane selon au moins une des revendications précédentes,
caractérisée en ce que
comme polyol on utilise un mélange à base d'huile fonctionnalisée par un hydroxyle ayant une fonctionnalité en OH d'au moins 2 et des oxydes de polypropylène di et/ou trifonctionnels, des oxydes de polyéthylène ou leurs copolymères.

4. Composition de polyuréthane selon au moins une des revendications précédentes,
caractérisée en ce que
l'acide silicique hautement dispersé est utilisé en une quantité allant de 0,1 à 5 % en poids, rapporté à la composition totale, de préférence en une quantité allant de 0,3 à 3 % en poids.

5. Composition de polyuréthane selon au moins une des revendications précédentes,
caractérisée en ce qu'
au moins une partie des substances de remplissage est traitée en surface avec de l'acide stéarique et/ou d'autres acides gras et/ou leurs sels de métal alcalin, des polydiènes carboxylés, des polyalphaoléfines carboxylées, des acides résiniques et/ou leurs sels de métaux.

6. Composition de polyuréthane selon au moins une des revendications précédentes,
caractérisée en ce qu'
elle est dépourvue de catalyseur.

7. Composition de polyuréthane selon au moins une des revendications 1 à 5,
caractérisée en ce qu'
elle renferme comme catalyseurs des composés organostanniques et/ou des amines tertiaires et/ou des amidines.

8. Composition de polyuréthane selon au moins une des revendications précédentes,
caractérisée en ce que
comme di ou polyisocyanate on utilise le diphénylméthane diisocyanate (MDI), soit pur, soit comme mélange oligomères/isomères (MDI brut), le toluène diisocyanate et/ou leurs produits de réaction avec des diols à bas poids moléculaire.

9. Utilisation de la composition de polyuréthane selon l'une des revendications précédentes, comme substance adhésive, matériau d'étanchéité ou matériau de coulée.
